# EUROPEAN PATENT SPECIFICATION

(11) **EP 0 583 355 B1**
(45) Date of publication and mention of the grant of the patent: **03.03.1999**
(21) Application number: 92911219.1
(22) Date of filing: 02.04.1992
(51) Int. Cl.: B32B 27/36, B05D 3/06, C08L 75/08, C08L 75/14, C08L 75/16, C08K 5/05, C08F 2/50, C08F 220/36, C08F 265/06, C08F 283/04, C08G 69/44, C09D 4/00, C09D 4/06

(54) **UV CURABLE BLEND COMPOSITIONS AND PROCESSES**
UV-STRAHLUNG HARTBARE ZUSAMMENSETZUNGEN UND VERFAHREN ZU IHRER HERSTELLUNG
COMPOSITIONS POLYMERISABLES AUX UV ET PROCEDES DE FABRICATION DESDITES COMPOSITIONS

(30) Priority: 03.04.1991 US 679755
(43) Date of publication of application: 23.02.1994
(60) Divisional application: 98202718.7
(73) Proprietor: RED SPOT PAINT & VARNISH CO., INC., Evansville, IN 47703 (US)
(72) Inventor: LAKE, Randall, T., Newburgh, IN 47630 (US)
(74) Representative: Bannerman, David Gardner
(86) International application number: US9202710
(87) International publication number: WO9217337

(56) References cited:
- US-A- 4 065 587
- US-A- 4 128 600
- US-A- 4 287 323
- US-A- 4 393 187
- US-A- 4 463 169
- US-A- 4 511 596
- US-A- 4 608 409
- US-A- 4 717 739

## Description

### BACKGROUND OF THE INVENTION

The present invention relates generally to ultraviolet (UV) cured coatings, and more particularly to UV curable coatings which have demonstrated high gloss, improved scratch and abrasion resistance and other properties excellently suited for overlay and other compositions, as well as to processes of their use and to coated articles resulting therefrom.

It is known to the art that conventionally cured coatings have significant disadvantages. In general, the topcoat and the curing agent are applied separately, in a particular sequence and at particular concentration levels. Because both the proportions of the ingredients and the timing of their application is critical, conventionally cured topcoats have been difficult and costly to apply, especially with the efficiency and consistency required in modern commercial applications.

Ultraviolet (UV) cured coatings overcome several disadvantages associated with conventional topcoat finishes. In particular, UV cured topcoats may be premixed so that the polymerization initiator is added to the active ingredients by the manufacturer when the coating is produced, and not by the coating user when the coating is to be applied. Thus, mixing and measurement errors can be avoided and a more consistent product can be obtained.

Despite their many advantages, UV curable coating compositions pose problems which must be addressed. For example, typical UV topcoats are high molecular weight, highly cross linked films formed from highly reactive acrylate functionality. As such, known UV topcoats have suffered from limited durability, have been prone to cured resin shrinkage, and have required high doses of UV light to cure. UV topcoats formulated to overcome these problems typically suffer from a loss of durability or processibility, including diminished scratch resistance, abrasion resistance, weather resistance, chemical resistance, stain resistance, thermal stability and adhesion.

Also, importantly, known UV topcoats upon curing have long proven to form rigid, unflexible and unyieldable coatings. Thus, problems have been experienced in the industry where topcoat overlaid materials have been subjected to conditions causing expansion or contraction of the product during processing or in the field of use. For example, UV topcoats overlaying dark, e.g. black finishes which expand upon heating have been known to crack, form other imperfections, or even cause bending or warping of the substrate due to tensions built up in the materials.

In light of the foregoing, a need exists for a UV curable composition which is conveniently processible and which forms coatings exhibiting improved physical and chemical properties, e.g., improved flexibility, durability, scratch resistance, abrasion resistance, thermal stability, crack resistance, chemical resistance, stain resistance, weather resistance and adhesion.

### SUMMARY OF THE INVENTION

The applicant's invention now addresses these needs and provides in one preferred embodiment a UV curable blend composition comprising: (a) 35% to 65% by weight of a first acrylated aliphatic urethane having a molecular weight of 500 to 2000 and formed by the reaction of (i) a first multifunctional acrylate with a molecular weight of 190 to 500 and containing at least three polymerizable unsaturated groups per molecule, with (ii) an aliphatic urethane based on a polymer of alkyl carbomonocycle diisocyanate with alkanepolyol polyacrylates; (b) 5% to 25% by weight of a second acrylated aliphatic urethane having a molecular weight of 1200 to 2600 and formed by the reaction of a second multifunctional acrylate with a molecular weight of 110 to 500 with an aliphatic urethane based on a polyether and having a molecular weight of 800 to 2200; (c) 10% to 55% by weight of a third multifunctional acrylate having a molecular weight of between 170 and 1000 and containing at least two polymerizable unsaturated groups per molecule; and (d) a photopolymerization initiator or sensitizer. The composition can also optionally include a solvent. Unless otherwise specified, percents by weight set forth in this application are calculated exclusive of any solvent present. More preferred compositions can also include suitable light stabilizing agents, e.g., hindered amine and/or benzotriazole derivatives.

Additional preferred embodiments of the invention relate to coated articles and coating processes resulting from and involving the use of applicant's preferred topcoated compositions.

One object of the invention is to provide improved ultraviolet curable compositions demonstrating superior chemical and physical properties such as improved flexibility, durability, thermal stability, crack resistance, chemical resistance, stain resistance, weather resistance and adhesion.

Another object of the invention is to provide processes for coating or overlaying articles, e.g. coated, e.g. painted, or uncoated plastic or metal parts, so as to improve their physical and chemical properties.

Still another object of the present invention is to provide a coated or overlaid article exhibiting superior physical and chemical properties, and especially wherein the topcoat is both flexible to resist cracking or other significant deterioration upon expansion of the article or another coating underlaying the topcoat, and durable to avoid scratching and abrasion of the high gloss surface.

Another object of this invention is to provide coating processes and compositions which enable convenient, consistent and uniform processibility.

Further objects and advantages of the present invention will be apparent from the following description and claims.

### DESCRIPTION OF THE PREFERRED EMBODIMENT

For the purposes of promoting an understanding of the principles of the invention, reference will now be made to certain embodiments and specific language will be used to describe the same.

As indicated above, one preferred embodiment of this invention relates to a UV curable composition. In this regard, Formula I, set forth below, shows starting materials arid compositional ranges for the compositions of the invention. The compositional ranges are given as a percent by weight of the composition excluding any solvent which is included.

| Formula I: | |
|---|---|
| Acrylated aliphatic urethane #1 | (35-65%) |
| Acrylated aliphatic urethane #2 | (5-25%) |
| Multifunctional acrylate | (10-55%) |
| Photopolymerization initiator | (1-15%) |
| Hindered amine light stabilizer | (0.1-7.5%) |
| Hydroxy phenyl benzotriazole | (0.1-7.5%) |
| Antioxidant | (0.1%-3%) |
| Flow additive | (0.1-5%) |

The first acrylated alipliatic urethane according to the present invention contains about 5% to 95% by weight of prereacted multifunctional acrylate and the balance in an aliphatic urethane. More particularly, to obtain the first acrylated aliphatic urethane, a multifunctional acrylate having a molecular weight of 190 to 500 and containing at least 3 polymerizable unsaturated groups per molecule (e.g., pentaerythritol triacrylate, diphenyl erythritol tetraacrylate, and trimethylolpropane triacrylate) is prereacted with an aliphatic urethane based on a polymer of alkyl carbomonocycle diisocyanate with alkanepolyol polyacrylates. The acrylate having at least three polymerizable groups provides an acrylated aliphatic urethane giving final coatings demonstrating good surface hardness, for example as evidenced by steel wool scratch resistance.

The preferred first acrylated aliphatic urethane has a final molecular weight of 500 to 2000. More preferably, the first acrylated aliphatic urethane has a molecular weight of 800 to 1000, with a molecular weight of about 800 being most preferred in work to date. These preferred acrylated aliphatic urethanes provide coatings of good weather and thermal crack resistance. Further, these acrylated aliphatic urethanes provide advantageous application solids, curing rates and material compatibility.

The first acrylated aliphatic urethane may be obtained commercially. For example, EBECRYL 8301, available from Radcure Specialties, Inc. of Atlanta, Georgia has been highly preferred as the first acrylated aliphatic urethane in work to date.

Exclusive of any solvent present, as indicated above, the first acrylated aliphatic urethane constitutes 35% to 65% by weight of the coating composition. More preferably, this acrylated aliphatic urethane makes up 40% to 60% of the composition, most preferably 45-55%. These preferred levels have provided good weather and thermal crack resistance, as well as advantageous scratch and abrasion resistance, viscosity, material capacity and cure rates.

To obtain the second acrylated aliphatic urethane, a multifunctional acrylate having a molecular weight of between 110 and 500 (e.g., 1,6 hexanediol diacrylate, hydroxy ethyl acrylate, arid trimethylolpropane triacrylate) is prereacted with an alipahtic urethane based on a polyether and having a molecular weight of 800 to 2200 to provide an acrylated aliphatic urethane having a final molecular weight of 1200 to 2600. Acrylated aliphatic urethanes having molecular weights of 1500 to 2000 are more preferred, with those having a molecular weight of about 1800 being most preferred to date. These preferred acrylated aliphatic urethanes provide coatings of good weather and thermal crack resistance arid as well excellent flexibility, Further, these acrylated aliphatic urethanes provide advantageous application solids, curing rates and material compatibility.

Commercially available acrylated aliphatic urethanes may be used for the second urethane as well. For example, "AB 2010", available from American Biltrite of Lawrenceville, New Jersey, has been a highly preferred as the second acrylated aliphatic urethane in work to date.

Exclusive of any solvent, as indicated above, the acrylated aliphatic urethane constitutes 5% to 25% by weight of the composition. More preferably, this acrylated aliphatic urethane makes up 10% to 20% of the composition, with a content of 15-20% being most preferred. These preferred levels have provided good thermal, crack, scratch and abrasion resistance, as well as advantageous viscosity, material capacity and cure rates.

As will be understood, the particular multifunctional acrylate employed in Formula I will depend upon the desired application viscosity arid properties. Typical multifunctional acrylates are of the reactive diluent type, have a molecular weight of 170 to 1000, and contain at least two polymerizable unsaturated groups per molecule. Representative multifunctional acrylates thus include ethylene glycol di(meth)acrylate, 1,6-hexanediol diacrylate, pentaerythritol triacrylate, pentaerythritol tetra acrylate, trimethylolpropane triacrylate, tetraethleneglycol diacrylate, and the like, and mixtures thereof, with light-stable materials, e.g. 1,6-hexanediol diacrylate, being more preferred.

The preferred coating composition includes this multifunctional acrylate in an amount of 10% to 55% by weight. The range of 10% to 40% is more preferred, with 10%-30% being most preferred in work to date. These preferred levels provide compositions of good compatibility which give coatings of excellent scratch, abrasion, thermal and crack resistance.

As those practice in these areas will appreciate, many photopolymerization initiators and/or sensitizers will be suitable for the invention. These include, for instance, benzophenone, benzion, benzionmethyl ether, benzion-n-butyl ether, benzion-iso-butyl ether, propiophenone, acetophenone, methyphenylgloxylate, 1-hydroxycyclohexyl phenyl ketone, 2,2-diethoxyacetophenone, ethlphenylpyloxylate, phenanthraquinone, and the like, and mixtures thereof. In work thus far, 1-hydroxycyclohexyl phenyl ketone has been more preferred. For additional information on photopolymerization initiators and sensitizers, reference can be made to C. G. Roffey, Photopolymerization of Surface Coatings, Chapter 3: "Photo-initiators and photo-sensitizers", John Wiley & Sons Ltd (1982), which is hereby incorporated by reference.

The photopolymerization initiator or sensitizer will be included in an amount sufficient to obtain the desired cure response. In preferred compositions of the invention, the photopolymerization initiator or sensitizer is included in amounts of 1% to 15% by weight. The range of 1% to 10% is more preferred, with 5-10% being most preferred so far. As indicated, however, the amount of initiator included will vary based upon many factors such as the cure rate and durability desired.

The composition also preferably includes other materials such as light stabilizers, e.g. suitable hindered amines and/or benzotriazole derivatives. These materials will be included in varying amounts ill accordance with the particular use or application desired. When included, their amounts will be sufficient to provide increased weatherability yet still obtain adequate cure response for the composition. In more preferred compositions, hindered amine, hydroxyphenyl benzotriazole (or other suitable benzotriazole compound) and antioxidants have been included in amounts of about 0.1-7.5%, 0.1-7.5% and 0.1-3.0% respectfully, and in particularly preferred compositions about 1.2%, 0.3% and 0.3% respectively.

As stated, the coating composition also optionally includes a suitable inert solvent. Representative such solvents include ester solvents, e.g. ethyl acetate, butyl acetate, and the like, ketone solvents, e.g. acetone, methylisobutylketone, methylethylketone, and the like, alcohols, e.g. butyl alcohol, and the like, and aromatic solvents, e.g. toluene, xylene, and the like. The amount of solvent included will vary in accordance with the particular application at hand. For instance, for spray applications, higher levels of solvent will typically be included, while for roll applications, lower levels of inert solvent, if any, will be employed. In any event, the inert solvent will constitute from 0% to about 95% by weight of the entire coating composition, and in more preferred coating compositions about 40% to 60%.

As will be understood, the composition can also include other conventional additives. For instance, it can contain polymeric or silicone coating surface improvers, flow improvers, dyes, pigments, antioxidants, flatting agents (e.g. wax-coated or non-wax-coated silica or other inorganic materials), etc. In more preferred compositions, flow improver is included at a level of about 0.3-3%, and in one especially preferred composition, the flow improver Byk 301, available from BYK-CHEMIE, of Wallingford, Connecticut has been included.

As to its use, the composition can be applied by any conventional coating method as known in the art. For example the composition can be applied directly to the substrate or over another previously-cured (e.g. paints or primers) or uncured (e.g. in the case of tie coats) coating. The material is advantageously used at about 0.3 mils to about 3.0 mils of cured film thickness, with more preferred cured film thicknesses being those around about 1 mil. Preferred thicknesses will provide sufficient film continuity, avoid surface sagging, and promote a satisfactory cure.

Once applied, the coating composition can be cured by irradiation with ultraviolet rays as is known to those skilled in the art. In this regard, the irradiation is continued until curing is complete, with preferred exposure times typically being less than 300 seconds. Curing temperatures can range from room temperature to the heat distortion temperature of the substrate, while curing distances are typically between about 2 and 18 inches from the UV source.

An ultraviolet light source having a wavelength range of between about 1800 Angstroms and 4500 Angstroms is preferred for curing the topcoat. For example, sunlight, mercury lamps, arc lamps, zenon lamps, gallium lamps, and the like may be used, but high pressure or ultrahigh pressure mercury lamps provide particularly advantageous rapid cures.

A high pressure mercury lamp having an intensity of about 30 W/cm to 400 W/cm is preferred, for a total exposure of between about 300 and about 16000 mJ/cm² as measured by a compact radiometer at 60 to 1200 mW/cm² and about 75 to about 4000 mJ as measured by a UVIMAP, with a preferred exposure of about 3000 mJ/cm² as measured by a compact radiometer at 260 mW/cm² and about 700 mJ as measured by a UVIMAP. These preferred curing processes have provided good through cure, and have ensured advantageous coatings which resist premature yellowing and demonstrate desirable thermal crack resistance. Moreover, these advantageous cures have been achieved over a surprisingly wide range of exposures. Accordingly, the preferred compositions are readily and highly conveniently processible. Previously known UV curable compositions have demonstrated serious deficiencies in this regard, a problem long recognized in the industry leading to increased production costs and wastes of time and materials. Further, the final coatings have the uniquely combined properties of durability, scratch resistance and flexibility, a combination long sought in the coating field.

For the purposes of promoting a further understanding of the invention and its preferred features and advantages, reference will now be made to the following specific examples and tables. It will be understood that these examples and tables are given by way of illustration and are not intended to be restrictive of the invention.

### EXAMPLE 1

### Preparation of Preferred UV Curable Coating Composition

In order to prepare a UV curable coating composition in accordance with the invention, items 1 and 2 of Formula II below were charged into a clean stainless steel vessel equipped with a stirrer. Thereafter, ingredients 3 through 9 were added under agitation until a clear homogeneous mixture was obtained. This coating composition was called "Topcoat A."

| Formula II: | | |
|---|---|---|
| | | Part by weight |
| 1. | Isopropanol | 575.1 |
| 2. | Butanol | 17.9 |
| 3. | 1-Hydroxycyclohexyl phenyl ketone | 26.0 |
| 4. | Hindered amine light stabilizer | 5.0 |
| 5. | Benzotriazole | 1.0 |
| 6. | Antioxidant | 1.0 |
| 7. | Acrylated aliphatic urethane #1* | 176.0 |
| 8. | Acrylated aliphatic urethane #2** | 78.0 |
| 9. | 1,6 Hexanediol diacrylate | 39.0 |
| 10. | Trimethylolpropane triacrylate | 78.0 |
| 11. | Flow improver (Byk 301) | 3.0 |

| | | |
|---|---|---|
| * "EBECRYL 8301", based on polymer of alkyl carbomonocycle diisocyanate with alkanepolyol polyacrylate prereacted with an acrylated polyol. | | |
| ** "AB 2010," based on a polyether aliphatic urethane prereacted with a multifunctional acrylate. | | |

### EXAMPLE 2

### Production of Topcoated Plastic Molded Article

The above-described Topcoat A was applied to polycarbonate resin lenses by spray to allow 23 microns of cured coating thickness. Thereafter, the material was irradiated with a high pressure mercury lamp of 120 W/cm², with the substrate positioned eight inches from the light source for an exposure of 3000 mJ/cm² in air.

The thus obtained topcoated polycarbonate resin lens had a clear appearance. The product was evaluated by exterior decorative standards, and superior results were obtained as set forth in Table 1.

**TABLE 1**

| Evaluated Item | Evaluated Method | Results |
|---|---|---|
| Scratch Resistance | 0000 Steel Wool Rubs | Passable |
| Adhesion | Peel Test ASTM | No loss |
| Abrasion Resistance | Taber Abrader, CS-10, 500g load, 300 cycles | Passable |
| Water Resistance | 32 degrees Centigrade, 240 hour immersion | Passable, Secondary adhesion OK |
| Thermal Shock Resist. | 4 hrs. water immersion 4 hrs. -29°C Steam blast on scribe | Passable |
| Heat Resistance | 132°C, 2 hrs. | No cracks |
| Resistance to Water & Soap Spotting | Discoloration | Passable |
| Resist. to Acid Spots | No dulling/color change | Passable |
| Chemical Resistance | Motor Oil, Tar remover Windshield Wiper Fluid Antifreeze, Motol Fuel | Passable |
| Weather Resistance | EMMA (QUE) 925 MJ, 3.5 years equivalence | Passable |
| Weather Resistance | Florida exposure 12 months, 45 degrees South | Passable |

### EXAMPLE 3

### Comparative Coating Material #1

The overlay was prepared in the same manner as Topcoat A in Example 1 except the first acrylated aliphatic urethane was replaced with one of a molecular weight of 2279 and labeled "Topcoat B."

### EXAMPLE 4

### Comparative Coated Article #1

Topcoat B was applied and cured as was topcoat A in Example 2. The resultant product was evaluated by the same conditions as in Example 2, and produced the following results:

**TABLE 2**

| Evaluated Item | Results of Evaluation |
|---|---|
| Scratch Resistance | Noticeable Scratches |
| Adhesion | No loss |
| Abrasion Resistance | Unacceptable |
| Water Resistance | Passable Secondary adhesion OK |
| Thermal Shock Resistance | Passable |
| Heat Resistance | Acceptable |
| Resistance to Water & Soap Spotting | Passable |
| Resistance to Acid Spotting | Passable |
| Chemical Resistance | Passable |
| Weather Resistance | Passable |

### EXAMPLE 5

### Comparative Coating Material #2

The overlay was prepared in the same manner as Topcoat A in Example 1 except the second acrylated aliphatic urethane was replaced with one of a molecular weight of 1700 (non-polyether type) and labeled "Topcoat C."

### EXAMPLE 6

### Comparative Coated Article #2

Topcoat C was applied and cured as was topcoat A in Example 2. The resultant product was evaluated by the same conditions as in Example 2, and produced the following results:

**TABLE 3**

| Evaluated Item | Results of Evaluation |
|---|---|
| Scratch Resistance | Noticeable Scratches |
| Adhesion | No loss |
| Abrasion Resistance | Unacceptable |
| Water Resistance | Passable Secondary adhesion OK |
| Thermal Shock Resistance | Passable |
| Heat Resistance | Unacceptable |
| Resistance to Water & Soap Spotting | Passable |
| Resistance to Acid Spotting | Passable |
| Chemical Resistance | Passable |
| Weather Resistance | Passable |

It was thus demonstrated that the coating compositions of the present invention possess improved physical and chemical properties.

It should be understood that many changes or modifications can be made to adapt the invention to a particular use without changing its basic features. Therefore, while the invention has been described in detail in the foregoing examples and descriptions, the same are to be considered illustrative and not restrictive in character. It is to be understood that preferred embodiments have been described in the preceding examples, and that all changes and modifications that come within the spirit of the invention are desired to be protected.

## Claims

1. An ultraviolet curable blend composition, comprising, exclusive of any solvent present:
35% to 65% by weight of a first acrylated aliphatic urethane, having a molecular weight of between 500 and 2000 and formed by the reaction of
(i) a first multifunctional acrylate with a molecular weight of 190 to 500 and containing at least three polymerizable unsaturated groups per molecule, with
(ii) an aliphatic urethane based on a polymer of alkyl carbomonocycle diisocyanate with alkanepolyol polyacrylates;
5% to 25% by weight of a second acrylated aliphatic urethane having a molecular weight of 1200 to about 2000 and formed by the reaction of
(i) a second multifunctional acrylate with a molecular weight of 110 to 500, and
(ii) an aliphatic urethane based on a polyether and having a molecular weight of 800 to 2200;
10 to 55% by weight of a third multifunctional acrylate having a molecular weight of 170 to 1000 and containing at least two polymerizable unsaturated groups per molecule; and
a photopolymerization initiator or sensitizer.

2. A coating composition according to claim 1 and further comprising a hindered amine light stabilizer.

3. A coating composition according to claim 2 and further comprising a benzotriazole light stabilizer.

4. A coating composition according to claim 1 and further comprising an antioxidant.

5. A coating composition according to Claim 1, and also comprising a suitable solvent.

6. A coating composition according to Claim 5, which, exclusive of said solvent, is comprised 40% to 60% by weight of said first acrylated aliphatic urethane.

7. A coating composition according to Claim 5, which, exclusive of said solvent, is comprised 10% to 20% by weight of said second acrylated aliphatic urethane.

8. A coating composition according to Claim 5, which, exclusive of said solvent, is comprised 10% to 30% of said third multifunctional acrylate.

9. A coating composition according to Claim 5, which, exclusive of said solvent, is comprised 1% to 15% by weight of said polymerisation initiator or sensitiser.

10. A coating composition according to Claim 9, wherein said first acrylated aliphatic urethane has a molecular weight of 800 to 1000.

11. A coating composition according to Claim 9, wherein said second acrylated aliphatic urethane has a molecular weight of 1500 to 2000.

12. A coating composition according to Claim 9, and also including a hindered amine and a benzotriazole light stabiliser.

13. A coating composition according to Claim 12, wherein said benzotriazole light stabiliser is hydroxy phenyl benzotriazole.

14. A method for forming a coating on an article, comprising the steps of:
(a) applying to the article an ultraviolet curable coating composition according to Claim 1, wherein the second multifunctional acrylate contains at least three polymerisable unsaturated groups per molecule; and
(b) irradiating and thereby curing the applied composition.

15. A method according to Claim 14, wherein said ultraviolet curable composition further comprises a solvent, and a hindered amine and a benzotriazole light stabiliser.

16. A method according to Claim 15, wherein said benzotriazole light stabiliser is hydroxy phenyl benzotriazole.

17. A method according to Claim 15, wherein:
exclusive of said solvent, said curable composition is comprised 40% to 60% by weight of said first acrylated aliphatic urethane, 10% to 20% by weight of said second acrylated aliphatic urethane, and 10% to 30% of said third multifunctional acrylate.

18. A method according to Claim 17, wherein said first acrylated aliphatic urethane has a molecular weight of 800 to 1000.

19. A method according to Claim 17, wherein said second acrylated aliphatic urethane has a molecular weight of 1500 to 2000.

20. A coated product which comprises a substrate and a top coating layer, characterised in that said top coating layer is a cured layer of an ultraviolet curable topcoat composition comprising an ultraviolet composition according to Claim 1.

21. A coated product according to Claim 20, wherein said ultraviolet curable topcoat composition further comprises a solvent, and a hindered amine and a benzotriazole light stabiliser.

22. A coated product according to Claim 21, and also comprising an underlay coating between said top coating layer and said substrate.

23. A coated product according to Claim 22, wherein:
exclusive of said solvent, said ultraviolet curable topcoat composition is comprised 40% to 60% by weight of said first acrylated aliphatic urethane, 10% to 20% by weight of said second acrylated aliphatic urethane and 10% to 30% by weight of said third multifunctional acrylate.

24. A coated product according to Claim 23, wherein said first acrylated aliphatic urethane has a molecular weight of 800 to 1000.

25. A coated product according to Claim 23, wherein said second acrylated aliphatic urethane has a molecular weight of 1500 to 2000.

## Patentansprüche

1. Durch ultraviolette Strahlung härtbare Zusammensetzung mit, ausschließlich eines jeglichen vorhandenen Lösungsmittels:
35 bis 65 Gew.-% eines ersten acrylierten aliphatischen Urethans mit einem Molekulargewicht zwischen 500 und 2000 und erhalten durch Umsetzung von
(i) einem ersten multifunktionellen Acrylat mit einem Molekulargewicht von 190 bis 500 und enthaltend mindestens drei polymerisierbare ungesättigte Gruppen pro Molekül, mit
(ii) einem aliphatischen Urethan auf Basis eines Polymeren von Alkyl-carbomonocyclishem Diisocyanat mit Alkanpolyolpolyacrylaten;
5 bis 25 Gew.-% eines zweiten acrylierten aliphatischen Urethans mit einem Molekulargewicht von 1200 bis etwa 2600 und erhalten durch Umsetzung von
(i) einem zweiten multifunktionellen Acrylat mit einem Molekulargewicht von 110 bis 500 und
(ii) einem aliphatischen Urethan auf Basis eines Polyethers und mit einem Molekulargewicht von 800 bis 2200;
10 bis 55 Gew.-% eines dritten multifunktionellen Acrylates mit einem Molekulargewicht von 170 bis 1000 und enthaltend mindestens zwei polymerisierbare ungesättigte Gruppen pro Molekül; und
einem Photopolymerisations-Initiator oder -Sensibilisierungsmittel.

2. Beschichtungszusammensetzung nach Anspruch 1, weiter enthaltend einen Lichtstabilisator aus einem gehinderten Amin.

3. Beschichtungszusammensetzung nach Anspruch 2, weiter enthaltend einen Lichtstabilisator aus einem Benzotriazol.

4. Beschichtungszusammensetzung nach Anspruch 1, weiter enthaltend ein Antioxidationsmittel.

5. Beschichtungszusammensetzung nach Anspruch 1, weiter enthaltend ein geeignetes Lösungsmittel.

6. Beschichtungszusammensetzung nach Anspruch 5, die ausschließlich des Lösungsmittel 40 bis 60 Gew.-% des ersten acrylierten aliphatischen Urethans enthält.

7. Beschichtungszusammensetzung nach Anspruch 5, die ausschließlich des Lösungsmittels 10 bis 20 Gew.-% des zweiten acrylierten aliphatischen Urethans enthält.

8. Beschichtungszusammensetzung nach Anspruch 5, die ausschließlich des Lösungsmittels 10 bis 30 % des dritten multifunktionellen Acrylates enthält.

9. Beschichtungszusammensetzung nach Anspruch 5, die ausschließlich des Lösungsmittels 1 bis 15 Gew.-% des Polymerisations-Initiators oder -Sensibilisierungsmittels enthält.

10. Beschichtungszusammensetzung nach Anspruch 9, in der das erste acrylierte aliphatische Urethan ein Molekulargewicht von 800 bis 1000 hat.

11. Beschichtungszusammensetzung nach Anspruch 9, in der das zweite acrylierte aliphatische Urethan ein Molekulargewicht von 1500 bis 2000 hat.

12. Beschichtungszusammensetzung nach Anspruch 9, ferner enthaltend ein gehindertes Amin und ein Benzotriazol als Lichtstabilisator.

13. Beschichtungszusammensetzung nach Anspruch 12, in der der Benzotriazol-Lichtstabilisator Hydroxyphenylbenzotriazol ist.

14. Verfahren zur Herstellung einer Beschichtung auf einem Gegenstand mit den Stufen:
(a) Aufbringen einer durch ultraviolette Strahlung härtbaren Beschichtungsmasse gemäß Anspruch 1 auf den Gegenstand, wobei in der Beschichtungsmasse das zweite multifunktionelle Acrylat mindestens drei polymerisierbare ungesättigte Gruppen pro Molekül enthält; und
(b) Bestrahlung und dadurch Härtung der aufgebrachten Zusammensetzung.

15. Verfahren nach Anspruch 14, bei dem die durch ultraviolette Strahlung härtbare Zusammensetzung weiterhin ein Lösungsmittel enthält sowie ein gehindertes Amin und einen Benzotriazol-Lichtstabilisator.

16. Verfahren nach Anspruch 15, bei dem der Benzotriazol-Lichtstabilisator Hydroxyphenylbenzotriazol ist.

17. Verfahren nach Anspruch 15, bei dem:
ausschließlich des Lösungsmittels, die härtbare Zusammensetzung aufgebaut ist aus 40 bis 60 Gew.-% des ersten acrylierten aliphatischen Urethans, 10 bis 20 Gew.-% des zweiten acrylierten aliphatischen Urethans und 10 bis 30 % des dritten multifunktionellen Acrylates.

18. Verfahren nach Anspruch 17, bei dem das erste acrylierte aliphatische Urethan ein Molekulargewicht von 800 bis 1000 aufweist.

19. Verfahren nach Anspruch 17, bei dem das zweite acrylierte aliphatische Urethan ein Molekulargewicht von 1500 bis 2000 aufweist.

20. Beschichtetes Produkt, das ein Substrat und eine Deckschicht aufweist, dadurch gekennzeichnet, daß die Deckschicht eine gehärtete Schicht einer durch ultraviolette Strahlung härtbaren Deckschicht-Zusammensetzung ist, die eine durch ultraviolette Strahlung härtbare Zusammensetzung nach Anspruch 1 aufweist.

21. Beschichtetes Produkt nach Anspruch 20, in dem die durch ultraviolette Strahlung härtbare Deckschicht-Zusammensetzung weiterhin ein Lösungsmittel enthält, sowie ein gehindertes Amin und einen Benzotriazol-Lichtstabilisator.

22. Beschichtetes Produkt nach Anspruch 21, ferner enthaltend eine Unter-Beschichtung zwischen der Deckschicht und dem Substrat.

23. Beschichtetes Produkt nach Anspruch 22, in dem: die durch ultraviolette Strahlung härtbare Deckschicht-Zusammensetzung ausschließlich des Lösungsmittels aufgebaut ist aus 40 bis 60 Gew.-% des ersten acrylierten aliphatischen Urethans, 10 bis 20 Gew.-% des zweiten acrylierten aliphatischen Urethans und 10 bis 30 Gew.-% des dritten multifunktionellen Acrylates.

24. Beschichtetes Produkt nach Anspruch 23, in dem das erste acrylierte aliphatische Urethan ein Molekulargewicht von 800 bis 1000 hat.

25. Beschichtetes Produkt nach Anspruch 23, in dem das zweite acrylierte aliphatische Urethan ein Molekulargewicht von 1500 bis 2000 hat.

## Revendications

1. Composition de mélange durcissable aux ultraviolets comprenant, en dehors de tout solvant présent : de 35 % à 65 % en poids d'un premier uréthane aliphatique acrylé, ayant un poids moléculaire de 500 à 2000 et formé par la réaction de
(i) un premier acrylate multifonctionnel ayant un poids moléculaire de 190 à 500 et contenant au moins trois groupes insaturés polymérisables par molécule, avec
(ii) un uréthane aliphatique à base d'un polymère de diisocyanate carbomonocyclique d'alkyle avec des polyacrylates d'alcane polyol ;
(iii) de 5 % à 25 % en poids d'un second uréthane aliphatique acrylé ayant un poids moléculaire de 1200 à 2600 et formé par la réaction de
(iv) un second acrylate multifonctionnel ayant un poids moléculaire de 110 à 500, et
(v) un uréthane aliphatique à base d'un polyéther et ayant un poids moléculaire de 800 à 2200 ;
(vi) de 10 % à 55 % en poids d'un troisième acrylate multifonctionnel ayant un poids moléculaire compris entre 170 et 1000 et contenant au moins deux groupes insaturés polymérisables par molécule ; et
un initiateur ou sensibilisateur de photopolymérisation.

2. Composition de revêtement selon la revendication 1 et comprenant en outre un stabilisateur vis-à-vis de la lumière de type amine à action retardée.

3. Composition de revêtement selon la revendication 2 et comprenant en outre un stabilisateur vis-à-vis de la lumière de type benzotriazole.

4. Composition de revêtement selon la revendication 1 comprenant en outre un antioxydant.

5. Composition de revêtement selon la revendication 1, comprenant également un solvant approprié.

6. Composition de revêtement selon la revendication 5, qui, en dehors de ce solvant, est constituée de 40 % à 60 % du premier uréthane aliphatique acrylé.

7. Composition de revêtement selon la revendication 5 qui, en dehors de tout solvant est constituée de 10 % à 20 % de ce second uréthane aliphatique acrylé.

8. Composition de revêtement selon, la revendication 5 qui, en dehors de ce solvant est constituée de 10 % à 30 % de ce troisième acrylate multifonctionnel.

9. Composition de revêtement selon la revendication 5 qui, en dehors de ce solvant, est constituée de 1 % à 15 % en poids de cet initiateur ou sensibilisateur de polymérisation.

10. Composition de revêtement selon la revendication 9, dans laquelle
le premier uréthane aliphatique acrylé a un poids moléculaire de 800 à 1000.

11. Composition de revêtement selon la revendication 9, dans laquelle
le second uréthane aliphatique acrylé a un pois moléculaire de 1500 à 2000.

12. Composition de revêtement selon la revendication 9, et incluant également une amine à action retardée et un stabilisateur vis-à-vis de la lumière de type benzotriazole.

13. Composition de revêtement selon la revendication 12, dans lequel
le stabilisateur vis-à-vis de la lumière de type benzotriazole est l'hydroxyphényl benzotriazole.

14. Procédé pour former un revêtement sur un article, comprenant les étapes de :
(a) application à l'article d'une composition de revêtement durcissable aux ultraviolets selon la revendication 1, le second acrylate multifonctionnel contenant au moins trois groupes insaturés polymérisables par molécule ;
et
(b) irradiation et ainsi durcissement de la composition appliquée.

15. Procédé selon la revendication 14,
dans lequel
la composition durcissable aux ultraviolets comprend en outre un solvant, ainsi qu'une amine à action retardée et un stabilisateur vis-à-vis de la lumière de type benzotriazole.

16. Procédé selon la revendication 15,
dans lequel
le stabilisateur vis-à-vis de la lumière de type benzotriazole est l'hydroxyphényl benzotriazole.

17. Procédé selon la revendication 15,
dans lequel
en dehors de ce solvant, la composition durcissable est constituée de 40 % à 60 % en poids de ce polymère uréthane aliphatique acrylé, de 10 % à 20 % en poids du second uréthane aliphatique acrylé, et de 10 % à 30 % du troisième acrylate multifonctionnel.

18. Procédé selon la revendication 17,
dans lequel
le premier uréthane aliphatique acrylé a une poids moléculaire de 800 à 1000.

19. Procédé selon la revendication 17,
dans lequel
le second uréthane aliphatique acrylé a un poids moléculaire de 1500 à 2000.

20. Produit revêtu qui comporte un substrat et une couche de finition,
caractérisé en ce que
la couche de finition est une couche durcie d'une composition de finition durcissable aux ultraviolets comprenant une composition durcissable aux ultraviolets selon la revendication 1.

21. Produit revêtu selon la revendication 20,
dans lequel
la composition de finition durcissable aux ultraviolets comprend en outre un solvant, ainsi qu'une amine à action retardée et un stabilisateur vis-à-vis de la lumière de type benzotriazole.

22. Produit revêtu selon la revendication 21, et comprenant également une couche de fond entre la couche de finition et le substrat.

23. Produit revêtu selon la revendication 22,
dans lequel
en dehors de ce solvant, la composition de finition durcissable aux ultraviolets est constituée de 40 % à 60 % en poids de ce premier uréthane aliphatique acrylé, de 10 % à 20 % en poids du second uréthane aliphatique acrylé et de 10 % à 30 % en poids du troisième acrylate multifonctionnel.

24. Produit revêtu selon la revendication 23,
dans lequel
le premier uréthane aliphatique acrylé a un poids moléculaire de 800 à 1000.

25. Produit revêtu selon la revendication 23,
dans lequel
le premier uréthane aliphatique acrylé a un poids moléculaire de 1500 à 2000.
